# EUROPEAN PATENT SPECIFICATION

(11) **EP 4 395 232 B1**
(45) Date of publication and mention of the grant of the patent: **26.11.2025**
(21) Application number: 23216228.9
(22) Date of filing: 13.12.2023
(51) Int. Cl.: H04L 9/32, H04L 9/00

(54) **AUTHENTIFICATION BLOCKCHAIN ADDRESSES**
AUTHENTIFIZIERUNG VON BLOCKCHAIN-ADRESSEN
AUTHENTIFICATION D'ADRESSES DE CHAÎNE DE BLOCS

(30) Priority: 30.12.2022 US 202218148771
(43) Date of publication of application: 03.07.2024
(60) Divisional application: 25209065.9
(73) Proprietor: eBay Inc., San Jose, CA 95125 (US)
(72) Inventor: RUBINSON, Ethan Benjamin, San Jose, 95125 (US); CHALKLEY, Andrew, San Jose, 95125 (US)
(74) Representative: Müller-Boré & Partner Patentanwälte PartG mbB

(56) References cited:
- WO-A1-2017/127564
- OMAR AHMAD SGHAIER ET AL: "Identity Management in IoT Networks Using Blockchain and Smart Contracts", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 July 2018 (2018-07-30), pages 994 - 1000, XP033556337, DOI: 10.1109/CYBERMATICS_2018.2018.00187

## Description

### BACKGROUND

A blockchain is a decentralized ledger that is stored across a network of computing devices. This decentralized ledger makes storing data on a blockchain network more secure than many traditional storage systems.

### SUMMARY

At a high level, the present technology relates to authenticating a blockchain address. For instance, a blockchain address is owned by an entity. The entity controls the transactions for the blockchain address, such as transferring funds away from the blockchain address. Blockchain addresses can be seen by others. Funds associated with the address are identifiable to others. The identity of the entity that owns the blockchain address is not known in many cases, and some entities may wish to keep their identity secret.

The identity of the entity can be determined using a private key that the owner uses to control the transactions from the blockchain address. For instance, a challenge message can be sent to the candidate owner that encrypts the message and sends it back. Mathematically, it is then determined that the owner used the private key to encrypt the message, thereby indicating that the entity holding the private key is the owner of the blockchain address.

A verification index includes mappings between entities that own blockchain addresses. Thus, when it is determined that an entity is an owner of a blockchain address based on the private key, the association between the entity and the blockchain address is mapped to the verification index. The verification index can be used to provide an indication of authenticity regarding a blockchain address. For instance, the blockchain address can be queried in the index to return an indication of authenticity. An API (application programming interface) can be built to provide access to the verification index so that third parties can determine authenticity between an entity and a blockchain address. WO 2017/127564 A1 describes an authentication technique that uses a distributed secure listing of transactions that includes encrypted data that can be used to authenticate a principal to a verifier. The distributed secure listing of transactions is stored in a blockchain based public or private digital distributed secure ledger.

The objects of the present invention are achieved by means of the appended set of claims. This summary is intended to introduce a selection of concepts in a simplified form that is further described in the detailed description of this disclosure. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 illustrates an example operating environment in which aspects of the technology may be employed, in accordance with an aspect described herein;
FIG. 2 illustrates an example authentication server that is suitable for employing aspects of the current technology, in accordance with an aspect described herein;
FIG. 3 is a table having example blockchain addresses and their associated fund balances, in accordance with an aspect described herein;
FIG. 4 is an example verification index, in accordance with an aspect described herein;
FIG. 5A is a data architecture diagram illustrating a simplified example of a blockchain ledger, in accordance with an aspect described herein;
FIG. 5B is a data architecture diagram illustrating an example smart contract code, transaction, and messages, in accordance with an aspect described herein;
FIG. 6 illustrates an example method for providing a verification response indicating an authenticity between an identity of an entity and a blockchain address, in accordance with an aspect described herein;
FIG. 7 illustrates an example method for providing a verification response that identifies an authenticity between an identity of an entity and a blockchain address, in accordance with an embodiment described herein;
FIG. 8 illustrates an example method for providing a verification response indicating whether an entity meets a threshold level of funds associated with a blockchain address; and
FIG. 9 illustrates an example computing device in which aspects of the technology may be employed, in accordance with an aspect described herein.

### DETAILED DESCRIPTION

Blockchain technology uses a publicly, or semi-public, distributed ledger. The transactions on the blockchain can be viewed by other computing devices. The ability to view sequential transactions on a blockchain helps ensure the integrity of the transactions. Further, many nodes maintain copies of the blockchain, thus further aiding in the security benefits, since changing a transaction would require changing many copies at one time.

Due to the public nature of blockchains and their operations, blockchain addresses are publicly visible. A blockchain address is a location where cryptocurrency, which is a type of digital currency often given as a reward to facilitating blockchain transactions, can be sent or received. This functions similar to an account. Because the blockchain address is public, along with the transactions, the blockchain addresses and their associated cryptocurrency account balances are also public information.

While the blockchain addresses are public, the identity of the owners of these addresses are often not. An owner can generally be described as an entity having access to a private key that allows it to control transactions for the blockchain address, such as sending cryptocurrency from the address. Thus, there is the potential that an entity could fake ownership of a blockchain address and its associated crypto currency. In some case, owners are public about which blockchain addresses they control, while in other cases, there is a desire to keep their identity secret.

In some cases, an entity might be required to prove they have the private key in order to show ownership of a blockchain address. When doing so, this generally is done without actually revealing the private key, which risks others having access to it and the ability to control transaction at the blockchain address. One way to prove ownership is to challenge the entity by sending it a message. The entity receives the message, encrypts it with the private key, and sends it back. If the message can be decoded using the associated public key, then you know the entity holds the private key and controls transactions with the blockchain address.

However, in some situations, it is not feasible to challenge an entity to prove ownership. Other situations might require repeated proof. In other cases, an entity might want to prove it has a certain amount of funds, yet still not reveal the association between its identity and the blockchain address, as this would give the public knowledge of how much digital currency is tied to it.

To solve these problems, the technology described herein generates and maintains a verification index that can be used to determine an identity for an owner of a blockchain address. In other cases, the verification index may be used to confirm other aspects of an owner's account without revealing the direct association between the owner and the blockchain address or its funds. The verification index can be generated by determining an entity has the private key for a blockchain address, for instance, by cryptographically challenging the entity. By verifying the entity is the owner of the blockchain address in this way, the identity of the entity can be mapped to the address in the verification index.

The verification index can then be queried to retrieve information about the owner or blockchain address. This allows a user to ensure an entity is the true owner of a blockchain address without going through a proof process directly with the entity, such as a cryptographic challenge. Thus, for instances where it is not suitable for a device to determine proof of ownership, e.g., whether there is not enough bandwidth or processing power to accomplish this task, ownership can still be proved using the verification index, e.g., by using a SQL (structured query language) query, API (application programming interface), etc.

The verification index also solves the anonymity problem, i.e., when an entity needs to provide proof of funds but doesn't want to reveal which account, or accounts, is tied to the entity. For instance, a verification request could ask whether an entity has a threshold amount of currency to make a transfer. The verification index is used to determine the blockchain address for the entity, and the associated funds are then identified for that blockchain address. Based on whether the available funds is above or below the threshold, then the response to the verification request could be a binary answer of "yes" or "no," for example. Thus, from the requestor's point of view, there is confidence that there are enough funds in a particular account, but the requestor is still unaware of exactly which account is tied to the owner and may also be unaware of the total amount of funds. This is a technological way to provide some anonymity with blockchain cryptocurrency accounts, yet still allow for proof of funds for making large purchases, getting preapproved, or for any other reason.

It will be realized that the method previously described is only an example that can be practiced from the description that follows, and it is provided to more easily understand the technology and recognize its benefits. Additional examples are now described with reference to the figures.

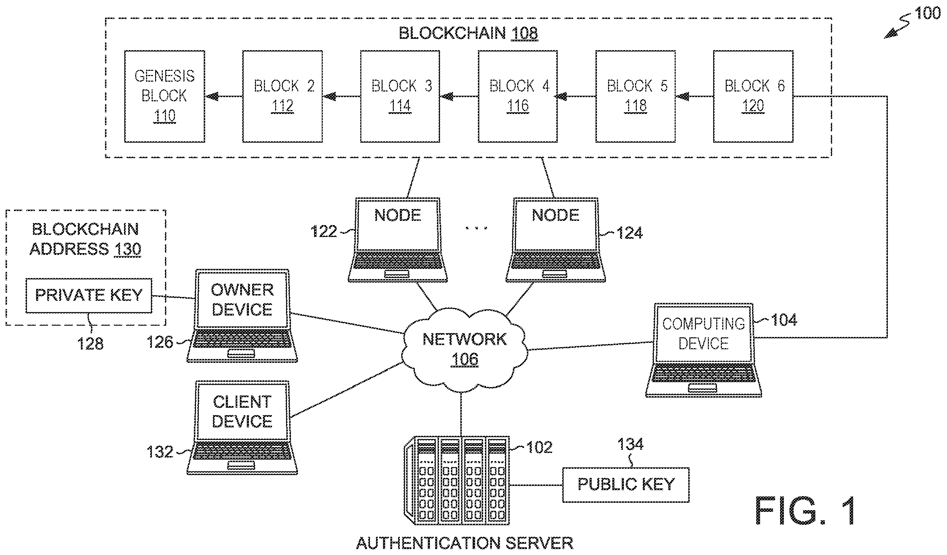

With reference now to FIG. 1, an example operating environment 100 in which aspects of the technology may be employed is provided. Among other components or engines not shown, operating environment 100 comprises authentication server 102 and computing device 104, each communicating via network 106.

Network 106 may include one or more networks (e.g., public network or virtual private network "VPN") as shown with network 106. Network 106 may include, without limitation, one or more local area networks (LANs) wide area networks (WANs), or any other communication network or method.

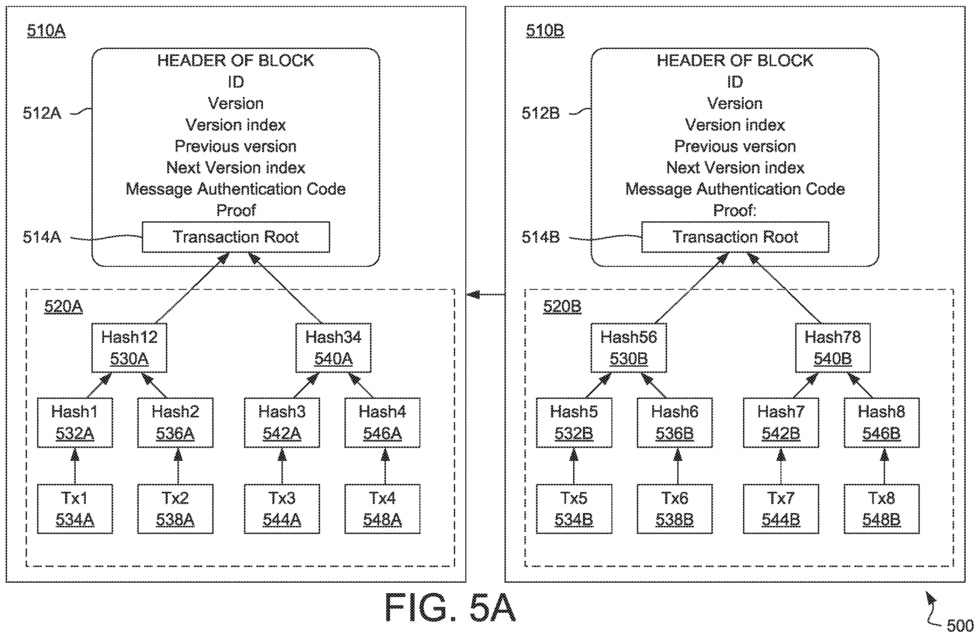

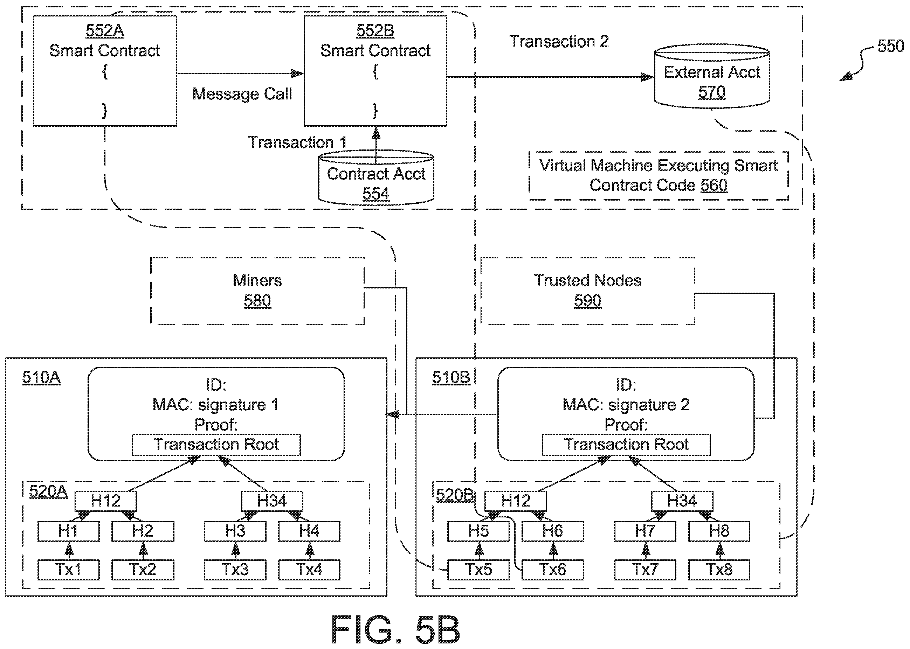

Operating environment 100 further comprises blockchain 108, to which computing device 104 is making a transaction by adding blocks to blockchain 108. Illustratively, blockchain 108 comprises a sequence of blocks representative of transactions on blockchain 108. The blocks in this example comprise genesis block 110, block 2 112, block 3 114, block 4 116, block 5 118, and block 6 120. Example blockchain architectures suitable for use as blockchain 108 include those described with reference to FIGS. 5A and 5B.

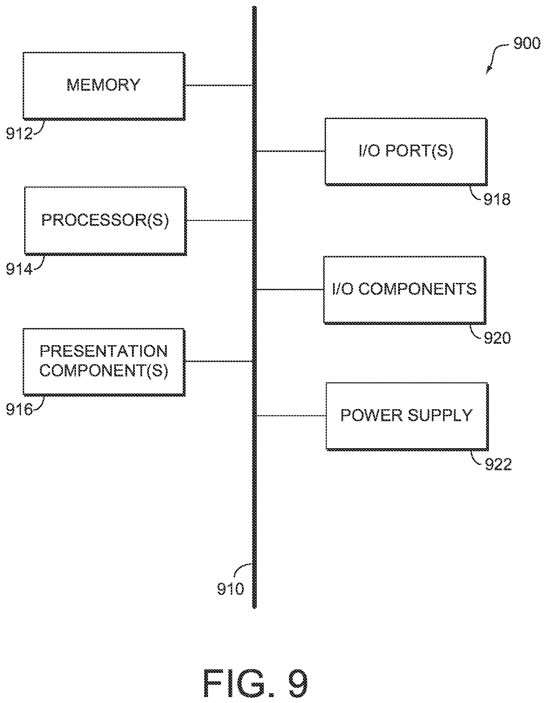

In this example, blockchain 108 is maintained by a network of nodes, including node 122 and node 124. An ellipsis is illustrated between node 122 and node 124 to illustrate that any number of nodes may maintain a copy of blockchain 108. Each of node 122 and node 124 may be a computing device, such as computing device 900 of FIG. 9. Node 122, node 124, and any other nodes may also communicate via network 106. In an aspect, computing device 104 is also a node.

Operating environment 100 further comprises owner device 126 and client device 132. Owner device 126 is the owner of a blockchain address 130, which comprises a location where funds can be transferred. As such, owner device 126 has access to a stored private key 128. In this example, private key 128 comprises a corresponding public key 134 paired via an asymmetric encryption process. Each of owner device 126 and client device 132 may be a computing device, such as computing device 900 of FIG. 9. In an aspect, owner device 126 or client device 132 is also a node.

It is again noted that operating environment 100 is an example. In this example computing device 104 is posting a transaction to blockchain 108. It will be understood that, in other examples, owner device 126, client device 132, or any other computing device illustrated or not illustrated, including node 122 and node 124, may be utilizing blockchain 108. Operating environment 100 is generally meant to be a simplified example provided to aid in describing the technology.

In general, owner device 126 utilizes authentication server 102 to authenticate that owner device 126 is the owner of a blockchain address 130 that is associated with private key 128. To do so, owner device 126 may send an authentication request to authentication server 102 to authenticate that owner device 126 is the owner of the blockchain address 130, having access to private key 128. As will be further described, authentication server 102 determines that owner device 126 is an owner of the blockchain address 130 by determining that owner device 126 is in possession of private key 128. This exchange may be done without owner device 126 revealing private key 128 to authentication server 102, thus helping to maintain the security of the blockchain address 130 and those funds associated with it. In response to determining that owner device 126 has access to private key 128, and thus controls transactions associated with the blockchain address 130, authentication server 102 may send an authentication response to owner device 126, thus indicating that it has authenticated the identity of the owner of owner device 126.

Client device 132 generally utilizes authentication server 102 to verify information about an identity of an entity, or other blockchain transaction or fund information. Using the technology described herein, client device 132 can utilize authentication server 102 to verify that information about an identity without engaging owner device 126 directly to prove ownership. As described, this adds an additional level of security to owner device 126 and permits additional anonymity, yet still allows client device 132 to get the information it requires to complete a transaction or other task. Further, this system allows client device 132 to prove that an entity has a certain threshold of funds, without requiring owner device 126 to reveal the identity of its blockchain address 130, which might provide more account balance information or blockchain transaction information by owner device 126 than desired by the owner. In verifying the identity or identifying other information related to owner device 126 or its blockchain address 130, client device 132 communicates a verification request to authentication server 102 to query a verification index of authentication server 102, as will be further described. In response, authentication server 102 retrieves the requested information and communicates this back to client device 132 in the form of a verification response.

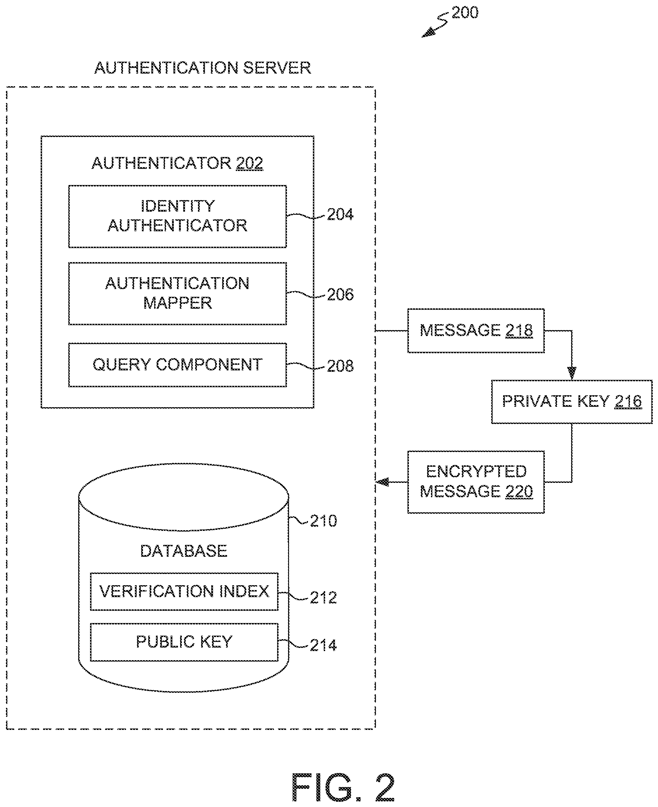

As noted, authentication server 102 generally receives an authentication request from owner device 126. Authentication server 102 authenticates that the identity of the entity associated with owner device 126 has access to private key 128, thereby controlling the transactions of a blockchain address 130 and evidencing that the entity is the owner of the blockchain address 130. Authentication server 102 further maintains a verification index based on authenticating the identity of entities and associating those entities as owners with blockchain addresses. Authentication server 102 uses the verification index to provide verification information about authenticated owners and their associated blockchain addresses. For instance, authentication server 102 may receive a verification request from client device 132, query the verification index in response to determine the requested verification information, and respond to client device 132 via a verification response. Functions performed by authentication server 102 are further described with reference to FIG. 2. Components of FIG. 1 may communicate with authentication server 102 via queries, such as SQL queries, through an API, or other like communication protocol.

With reference to both FIG. 1 and FIG. 2, and to the drawings more generally, it is noted and again emphasized that any additional or fewer components, in any arrangement, may be employed to achieve the desired functionality. Each are intended to be within the scope of the present disclosure. Although the various components of the figures are shown with lines for the sake of clarity, in reality, delineating various components is not so clear, and metaphorically, the lines may more accurately be grey or fuzzy. Although some components of the figures are depicted as single components, the depictions are intended as examples in nature and in number and are not to be construed as limiting for all implementations. The functionality of operating environment 100 and authentication server 200 can be further described based on the functionality and features of its components. Other arrangements and elements (e.g., machines, interfaces, functions, orders, and groupings of functions, etc.) can be used in addition to or instead of those shown, and some elements may be omitted altogether.

Referring primarily now to FIG. 2, an example authentication server 200 is provided. Authentication server 200 is one example that is suitable for use as authentication server 102 described with reference to FIG. 1. At a high level, authentication server 200 is a computing device that implements functional aspects of authenticator 202, which will be further described. As with other illustrated computing devices, authentication server 200 is intended to represent one or more computing devices, and could be distributed in nature. Functions performed by authentication server 200 may be performed by any one or more computing devices and in any combination. It will be understood that some implementations of the technology will comprise either a client-side or front-end computing device, a back-end or server-side computing device, or both executing any combination of functions from authenticator 202, among other functions.

Authentication server 200 further has access to database 210. Database 210 generally stores information including data, computer instructions (e.g., software program instructions, routines, or services), or models used in embodiments of the described technologies. Although depicted as a single database component, database 210 may be embodied as one or more databases or may be in the cloud. For instance, database 210 may store machine readable instructions for executing functions of authenticator 202. As illustrated, database 210 stores verification index 212 and public key 214. It is emphasized that authentication server 200, including authenticator 202 and database 210 are examples. In another example aspect, public key 214 is stored on a publicly accessible database and is retrieved by authentication server 200. Other arrangements and functions are contemplated and are intended to be within the scope of the described technology.

Generally, authenticator 202 is employed by authentication server 200 to authenticate an identity of an entity with ownership of a blockchain address and maintain this information within verification index 212. As will be described, authenticator 202 can use a combination of a message encrypted with a private key 216 and an accessed public key 214 to authenticate an owner of a blockchain address. Authentication server 200 further queries verification index 212 and retrieves verification information that is communicated to other computing devices by authentication server 200.

In this example, authenticator 202 includes identity authenticator 204, authentication mapper 206, and query component 208. Such elements are functional entities that, although depicted as performed by authenticator 202, may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory. These components are illustrated and described in this manner to more easily convey aspects of the present technology. However, it will be understood that more or fewer functions, and a combination of such functions, may be implemented to perform that which is described. Such other arrangements and implementations are intended to be within the scope of this disclosure.

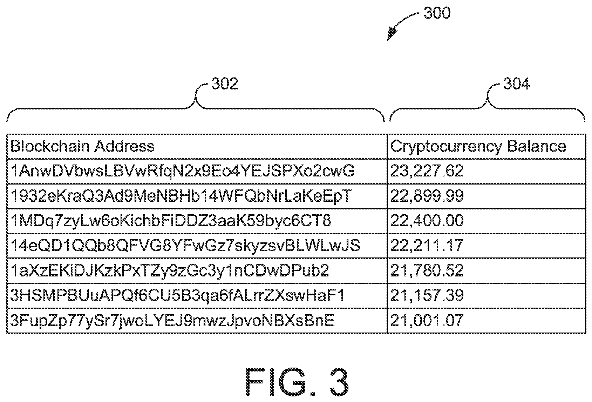

Having this in mind, identity authenticator 204 generally authenticates that an identity of an entity is an owner of a blockchain address. As noted, blockchain addresses are generally publicly available. By knowing a blockchain address, it is generally known what transactions are associated with that address and with what other blockchain addresses transactions go to and from, along with an overall balance of cryptocurrency. FIG. 3 illustrates table 300 comprising some example blockchain addresses 302 and their associated balances 304. While not illustrated, other account information associated with blockchain addresses 302 could be determined, such as funds transferred to and from each of blockchain addresses 302. As such, in some cases, owners of blockchain addresses 302 might not want to divulge which of blockchain addresses 302 each owns. As noted throughout, the technology provides a way to maintain some of this anonymity, yet still show proof of ownership of funds within balances 304.

Turing back to FIG. 2, one method that can be employed by identity authenticator 204 to authenticate an entity as an owner of a blockchain address uses encryption techniques, such as those using public key 214 and private key 216. Private key 216 can correspond with public key 214, meaning that they are created through an asymmetric encryption technique. Generally, asymmetric encryption, sometimes referred to as public-key encryption, is a method of encrypting data using a pair of keys: the public key and private key, such as public key 214 and private key 216. Public key 214 is accessible by authentication server 200 and its components, while private key 216 is accessible by another entity, i.e., the owner of a blockchain address, as private key 216 can be used to control transactions from the blockchain address, while public key 214 cannot.

Some example algorithms from which public key 214 and private key 216 may have been generated include RSA (Rivest-Shamir-Adleman) ECC (Elliptic Curve Cryptography), and Diffie-Hellman. RSA is one of the most widely used asymmetric encryption algorithms. It is based on the mathematical concept of factoring large composite numbers, and it involves the use of two large prime numbers. The keys in an RSA system are generated by multiplying two large prime numbers together, and the private key is derived from the prime factors of this number. ECC is based on the mathematics of elliptic curves. In some cases, it is faster and more efficient in terms of computational resources compared to RSA. Diffie-Hellman is a key exchange algorithm that is used to establish a shared secret between two parties without exchanging the secret directly. It is based on the mathematical concept of discrete logarithms. Other forms of asymmetric encryption may have been used to generate public key 214 and private key 216. Some examples, among others, include DSA (Digital Signature Algorithm), PGP (Pretty Good Privacy), and AES (Advanced Encryption Standard), and the like.

In an aspect, authenticator 202 employs identity authenticator 204 to authenticate an identity upon receiving an authentication request from a computing device. In response, authenticator 202 generates message 218. Message 218 may be any string of characters, as an example. Message 218 is communicated back to the computing device from which the authentication request was received. Message 218 may include computing code providing instructions that cause the computing device to encrypt message 218 with private key 216. The resulting encrypted message 220 is communicated back to authentication server 200 and received by identity authenticator 204.

Identity authenticator 204 accesses public key 214, either from storage or a publicly available source, for instance, and uses it to decrypt encrypted message 220. The decrypted message is compared to the original message 218. If these are the same, then it is known that the entity having private key 216 is the owner of the blockchain address from which private key 216 controls the transactions. The identity of the entity having private key 216 is provided to identity authenticator 204. The identity may identify an entity that is a person, business, pseudonym, website, social media handle or the like. In this way, identity authenticator 204 can authenticate that the identity with which it is communicating is the owner of the blockchain address.

In another aspect, identity authenticator 204 uses a public key, such as public key 214, to encrypt a message. The encrypted message is sent to the candidate owner, e.g. the entity that is to prove ownership of the blockchain address. The entity receives the encrypted message. Upon receiving the encrypted message from authentication server 200, the entity uses a private key, such as private key 216, to decrypt the encrypted message. The decrypted message is then provided back to authentication server 200. Identity authenticator 204 compares the original message encrypted with the public key with the received decrypted message from the entity. If the messages are the same, then it is known that the entity has access to the private key corresponding to the public key used to encrypt the message by identity authenticator 204. Based on this, the entity is identified as the owner of the blockchain address, as the entity has access to the private key associated with the blockchain address.

Some example methods that can be used by identity authenticator 204 to authenticate an identity with a blockchain address is described in U.S. Patent No. 11,449,819, issued September 20, 2022, from U.S. Application No. 16/457,248, entitled "Blockchain-Based Authentication and Authorization".

Authentication mapper 206 generally maps identity information to verification index 212 once authenticated by identity authenticator 204. That is, authentication mapper 206 maps the identity of the owner to the blockchain address in the verification index 212 based on determining, using identity authenticator 204, that the entity controls the transactions for the blockchain address. In general, verification index 212 is a structured dataset that stores identity information in association with blockchain addresses. Other information might be stored as well, such as transaction information, digital currency balances, and the like. Some of this information may be accessed from publicly available datasets using a blockchain address. Such information may be stored or retrieved by components of authenticator 202.

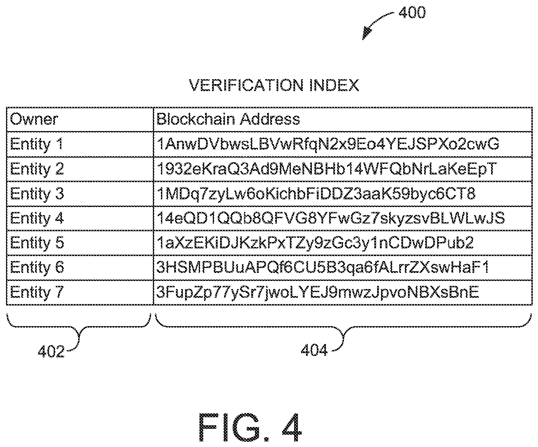

Turing to FIG. 4, an example verification index 400 is illustrated. Here, verification index 400 comprises verification information that includes entities 402. This may include the identity of an entity, such as Entities 1-7. Authentication server 200 shows entities 402 having associated blockchain addresses 404. By mapping the verification information in a structured manner, information from the verification index 400 can be retrieved by other components of authenticator 202. Verification index 400 is intended to be only one example, and other suitable data structures are intended to be within the scope of the described technology.

Query component 208 queries verification index 212 to retrieve verification information. Query component 208 may query verification index 212 in response to receiving a verification request. In an aspect, the verification request comprises a request to identify the identity of an owner associated with a particular blockchain address. In response, query component 208 uses the blockchain address and retrieves the associated identity of the entity. A verification response indicating the authenticity between the identity and the blockchain address communicated back. That is, the verification response may include the identity of the owner for the blockchain address, thus indicating the authenticity between the identity of the owner and the blockchain address.

In another example implementation, the verification request comprises a request to determine whether an entity has a threshold level of funds. This may be done in order to make a large purchase, become preapproved for a purchase, put funds into escrow, prove a certain level of funding before engaging in market activities, or for any other reason there is a need to determine whether an entity has a certain level of funds available to them. In this case, the verification request can include the identity of the entity and the threshold level of funds. In response, query component 208 queries verification index 212 to determine the blockchain address associated with the identity of the verification request. Authenticator 202 uses the blockchain address to identify the funds associated with the blockchain address. This information may be stored in verification index 212. In another example, this information is retrieved from a publicly available data source, such as a blockchain. Once the funds are determined, a verification response is communicated back. The verification response includes an indication whether the funds for the entity are above or below the threshold. By doing this, the requestor can determine whether an entity has a threshold level of funds available to them, yet not receive information identifying the exact blockchain address associated with the entity. This allows the owner of the blockchain address to have a level of privacy generally not available when using a public blockchain.

In another example implementation, the verification request comprises an identity. In response, authenticator 202 employs query component 208 to identify a blockchain address associated with the identity. In implementations, the identity of the entity being queried is the owner of one or more blockchain addresses. In some aspects, the funds associated with the one or more blockchain addresses can be identified, such as via a publicly available data source. The blockchain address or the funds, including a total amount of funds, or both may be provided back via a verification response.

In another example implementation, the verification request comprises a blockchain address. Authenticator 202 employs query component 208 to identify the identity of the owner associated with the blockchain address. Query component 208 further queries the verification index 212 to determine additional blockchain addresses associated with the identity. The verification response further comprises the additional blockchain addresses.

It will be understood that, while some examples using verification index 212 have been provided, other use cases will arise. As noted, verification index 212 may comprise various different information regarding owner identities, transaction information, cryptocurrency account balances, and so forth. As such, a verification request may seek to identify a variety of verification information within verification index 212. Any and all such uses of verification index 212 are intended to be within the scope of this disclosure.

Turning now to FIG. 5A, a data architecture diagram illustrating a simplified example of a blockchain ledger 500 is provided. The data architecture diagram and blockchain ledger 500 is one example that may be used as blockchain 108 of FIG. 1. Continuing with FIG. 5A, blockchain ledger 500 is simplified to show block headers, metadata and signatures in order to demonstrate an example ledger using a blockchain. More generally, a blockchain ledger may be a globally shared transactional database.

FIG. 5A is an illustrative example of a blockchain ledger 500 with a data tree holding transaction information that is verified using cryptographic techniques. In FIG. 5A, each block 510 includes a block header 512 with information regarding previous and subsequent blocks and stores a transaction root node 514 to a data tree 520 holding transactional data. This may store smart contracts, data related to transactions, or any other data. The elements of smart contracts may also be stored within transaction nodes of the blocks 510.

In the example of FIG. 5A, a Merkle tree 520 is used to cryptographically secure the transaction information. For example, Transaction Tx1 node 534A of data tree 520A of block 510A can be hashed to Hash1 node 532A, Transaction Tx2 node 538A may be hashed to Hash2 node 536A. Hash1 node 532A and Hash2 node 536A may be hashed to Hash12 node 530A. A similar subtree may be formed to generate Hash34 node 540A. For example, Transaction Tx3 node 544A of data tree 520A of block 510A can be hashed to Hash3 node 542A, Transaction Tx4 node 548A may be hashed to Hash4 node 546A. Hash3 node 542A and Hash4 node 546A may be hashed to Hash34 node 540A. Hash12 node 530A and Hash34 node 540A may be hashed to Transaction Root 514A hash sorted in the data block 510A. By using a Merkle tree, or any similar data structure, the integrity of the transactions may be checked by verifying the hash is correct.

FIG. 5B is a data architecture diagram showing an illustrative example of smart contract code, transactions and messages that are bundled into a block so that their integrity is cryptographically secure and so that they may be appended to a blockchain ledger. In FIG. 5B, smart contracts 552 are code that executes on a computer. More specifically, the code of a smart contract may be stored in a blockchain ledger and executed by nodes of a distributed blockchain platform at a given time. The result of the smart code execution may be stored in a blockchain ledger. Optionally, a currency, e.g., a cryptocurrency, may be expended as smart contract code is executed. In the example of FIG. 5B, smart contracts 552 are executed in virtual machine environment 550, although this is optional. Smart contracts may be defined by code. As described previously, the terms and conditions of the smart contract may be encoded (e.g., by hash) into a blockchain ledger. Specifically, smart contracts may be compiled into a byte-code (if executed in a virtual machine), and then the byte-code may be stored in a blockchain ledger as described previously.

In FIG. 5B, the aspects of smart contracts 552 are stored in transaction information nodes in data tree 520 in the blocks 510 of the blockchain ledger of FIG. 5A. In the example of FIG. 5B, smart contract 552A is stored in data block Txl node 534A of data tree 520A in block 510A, smart contract 552B is stored in Tx2 node 538A, contract account 554 associated with smart contract 552B is stored in Tx3 node 544A, and external account 570 is stored in Tx4 node 548A. In some cases, a smart contract, such as 552B for instance, may be executed by a virtual machine, such as virtual machine 560.

To ensure the smart contracts are secure and generate secure data, the blockchain ledger must be kept up to date. For example, if a smart contract is created, the code associated with a smart contract must be stored in a secure way. Similarly, when smart contract code executes and generates transaction information, the transaction information must be stored in a secure way.

In the example of FIG. 5B, at least embodiments for maintenance of the blockchain ledger are shown. In one embodiment, untrusted miner nodes ("miners") 580 may be rewarded for solving a cryptographic puzzle and thereby be allowed to append a block to the blockchain. Alternatively, a set of trusted nodes 590 may be used to append the next block to the blockchain ledger. Nodes may execute smart contract code, and then one winning node may append the next block to a blockchain ledger.

Though aspects of the technology disclosed herein resemble a smart contract, in the present techniques, the policy of the contract may determine the way that the blockchain ledger is maintained. For example, the policy may require that the validation or authorization process for blocks on the ledger is determined by a centralized control of a cluster of trusted nodes. In this case, the centralized control may be a trusted node, such as a sender server that is authorized to attest and sign the transaction blocks to validate them and validation by miners may not be needed.

Alternatively, the policy may provide for validation process decided by a decentralized cluster of untrusted nodes. In the situation where the blockchain ledger is distributed to a cluster of untrusted nodes, mining of blocks in the chain may be employed to validate the blockchain ledger.

Blockchains may use various time-stamping schemes, such as proof-of-work, to serialize changes. Alternate consensus methods include proof-of-stake, proof-of-burn, proof-of-research may also be utilized to serialize changes.

As noted above, in some examples, a blockchain ledger may be validated by miners, such as miners 580, to secure the blockchain. In this case, miners may collectively agree on a validation solution to be utilized. However, if a small network is utilized, e.g. private network, then the solution may be a Merkle tree and mining for the validation solution may not be required. When a transaction block is created, e.g., a transaction information data block for a transaction information data blockchain, the block is an unconfirmed and unidentified entity. To be part of the acknowledged "currency," it may be added to the blockchain, and therefore relates to the concept of a trusted cluster.

In a trusted cluster, when a data block is added, every node competes to acknowledge the next "transaction" (e.g., new transaction information or access control rule block). In one example, the nodes compete to mine and obtain the lowest hash value: min{previous_hash, contents_hash, random_nonce_to_be_guessed}result. Transaction order is protected by the computational race (faith that no one entity can beat the collective resources of the blockchain network). Mutual authentication parameters are broadcast and acknowledged to prevent double entries in the blockchain.

Alternatively, by broadcasting the metadata for authenticating a secure ledger across a restricted network, e.g., only the signed hash is broadcast, the blockchain may reduce the risks that come with data being held centrally. Decentralized consensus makes blockchains suitable for the recording of secure transactions or events. The metadata, which may contain information related to the data file, may also be ciphered for restricted access so that the metadata does not disclose information pertaining to the data file.

The mining process may be utilized to deter double accounting, overriding or replaying attacks, with the community arrangement on the agreement based on the "good faith" that no single node can control the entire cluster. A working assumption for mining is the existence of equivalent power distribution of honest parties with supremacy over dishonest or compromised ones. Every node or miner in a decentralized system has a copy of the blockchain. No centralized "official" copy exists and no user is "trusted" more than any other. Transactions may be broadcast to the network using software. Mining nodes may compete to compute a validation solution to validate transactions, and then broadcast the completed block validation to other nodes. Each node adds the block to its copy of the blockchain with transaction order established by the winning node.

Note that in a restricted network, stakeholders who are authorized to check or mine for the data file may or may not access the transaction blocks themselves, but would need to have keys to the metadata (since they are members of the restricted network, and are trusted) to obtain the details. As keys are applied on data with different data classifications, the stakeholders can be segmented.

A decentralized blockchain may also use ad hoc secure message passing and distributed networking. In this example, the transaction information blockchain ledger may be different from a conventional blockchain in that there is a centralized clearing house, e.g., authorized central control for validation. Without the mining process, the trusted cluster can be contained in a centralized blockchain instead of a public or democratic blockchain. One way to view this is that a decentralized portion is as "democratic N honest parties" (multiparty honest party is a cryptography concept), and a centralized portion as a "trusted monarchy for blockchain information correction." For example, there may be advantages to maintaining the data file as centrally authorized and kept offline.

In some examples, access to a resource and access control rule on a blockchain can be restricted by cryptographic means to be only open to authorized servers. Since the transaction information or transaction information blockchain ledgers are distributed, the authorized servers can validate it. A public key may be used as an address on a public blockchain ledger.

Growth of a decentralized blockchain may be accompanied by the risk of node centralization because the computer resources required to operate on bigger data become increasingly expensive.

The present techniques may involve operations occurring in one or more computing device, such as one or more machines. As used herein, "machine" means physical data-storage and processing hardware programed with instructions to perform specialized computing operations. It is to be understood that two or more different machines may share hardware components. For example, the same integrated circuit may be part of two or more different machines.

One of ordinary skill in the art will recognize that a wide variety of approaches may be utilized and combined with the present approach involving a transaction information blockchain ledger. The specific examples of different aspects of a transaction information blockchain ledger described herein are illustrative and are not intended to limit the scope of the techniques shown.

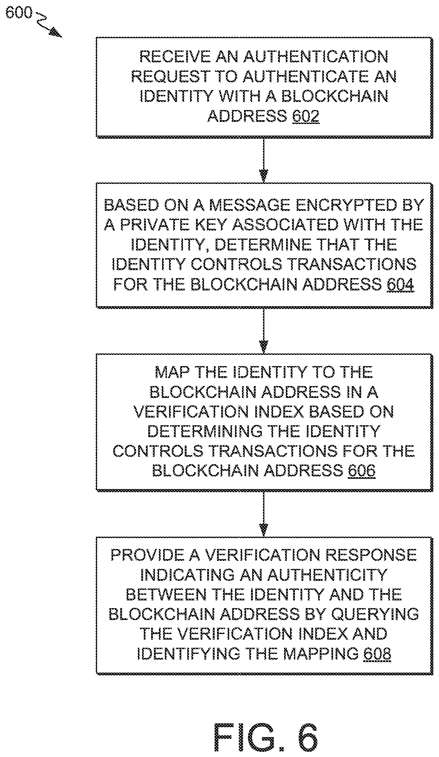

With reference now to FIGS. 6-8, block diagrams are provided respectively illustrating methods 600, 700, and 800 for authenticating blockchain address identity. Each block of methods 600, 700, and 800 may comprise a computing process performed using any combination of hardware, firmware, or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few possibilities. Methods 600, 700, and 800 may be implemented in whole or in part by components of operating environment 100 and authentication server 200.

Referring now to FIG. 6, an example method 600 is illustrated. At block 602, an authentication request is received. The authentication request may be received by a computing device of an owner that is to authenticate its identity with a particular blockchain address. The authentication request may be received by authentication server 200.

In response to the authentication request, the identity of the owner may be authenticated with the blockchain address. This may be performed by identity authenticator 204 of authenticator 202. For instance, a message is provided to the computing device in response to the authentication request, where it is encrypted with a private key associated with the blockchain address. The encrypted message is returned and decrypted using a corresponding public key. Based on the encrypted message of the private key being decrypted, it is determined that the entity has access to the private key and thus controls transaction associated with the blockchain address, thereby determining that the entity owns the blockchain address. Thus, is it determined at block 604 that the entity controls transactions for the blockchain address, and is thus the owner of the blockchain address.

At block 606, the identity of the entity is mapped as the owner to the blockchain address in a verification index, such as verification index 212. The mapping is done based on determining that the entity has access to the private key and controls transactions associated with the blockchain address. In an aspect, the mapping is a mapping of the blockchain address with the entity having been authenticated as the owner of the address.

At block 608 a verification response is provided. The verification response may be provided in response to a verification request that comprises a blockchain address and a request to identify the identity of the owner associated with the blockchain address. The identity is determined by querying the verification index 212 using query component 208 and identifying the identity that is associated with the blockchain address of the verification response. The indication may comprise the identity to show the authenticity of the entity as the owner of the blockchain address by having access to the private key that controls the transaction of the blockchain address.

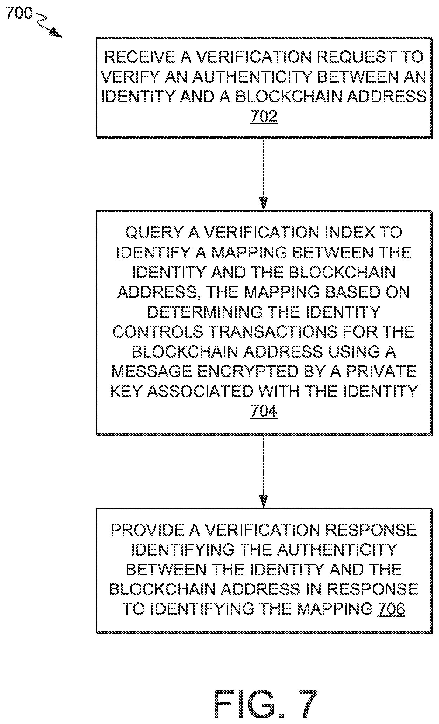

FIG. 7 provides another example method 700 that can be performed using the technology described herein. At block 702, a verification request is received. The verification request may be received at authentication server 200 and request to verify the authenticity between an identity and a blockchain address. The verification request may comprise the blockchain address and request to receive the identity to authenticate the identity as the owner of the blockchain address. In some cases, the verification index comprises an identity and a blockchain address and request to authenticate whether the identity is the owner of the blockchain address.

At block 704, a verification index, such as verification index 212 is queried. This may be performed by query component 208. The verification index maybe queried with the blockchain address to identify the identity of the owner of the blockchain address. The identity can be recalled from the verification index.

The verification index comprises mapping of identities that have been authenticated as the owners of blockchain address. For instance, the authentication may have been performed using identity authenticator 204 and mapped to the verification index using authentication mapper 206. That is, the mappings may be based on determining whether an entity has access to a private key that controls transactions associated with a blockchain address.

At block 706, a verification response is provided. The verification response may include an indication that an entity is the owner of a blockchain address. That is, the verification response may include an indication that an entity controls transaction of a blockchain address. This provides an authenticity between an identity and the blockchain address. The indication of authenticity may be based on and provided in response to identifying the mapping between the entity and the blockchain address within the verification index at block 704.

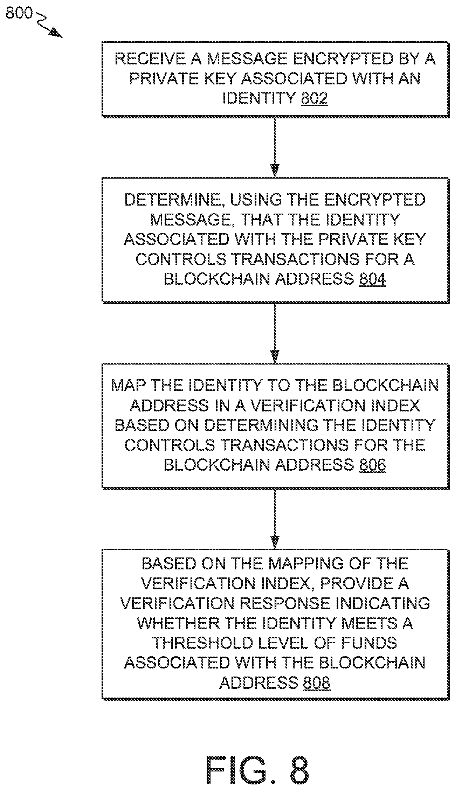

FIG. 8 provides another example method that can be practiced from the described technology. At block 802, an encrypted message is received. The encrypted message is received from a computing device to authenticate an identity of an entity as the owner of a blockchain address. The encrypted message has been encrypted using a private key associated with the entity. The message may have been provided by authentication server 200 in response to an authentication request.

At block 804, it is determined that the identity that encrypted the message with the private key controls the transaction of the blockchain address, and is thus the owner of the blockchain address. This may be done using identity authenticator 204. For instance, a public key corresponding to the private key may be retrieved and used to decrypt the encrypted message. If the public key decrypts the encrypted message, then it is known that the entity has access to the private key and thus owns the blockchain address, thereby determining that the identity associated with the private key controls transactions for the blockchain account.

Having determined that the identity controls transactions for the blockchain address by having access to the private key, at block 806, the identity is mapped to the blockchain address in a verification index. The mapping represents the authentication between the identity as the owner and the blockchain address. The mapping may be performed using identity authenticator 204.

At block 808 the verification index is used to provide an indication that an entity has access to a threshold level of funds. That is, a verification request can be received and comprise an identity of an entity along with a threshold level of funds. This may be done to determine whether the entity has access to enough funding for a particular event, such as a purchase or other like event. Query component 208 can be used to determine a blockchain address associated with the identity. Using the blockchain address, the amount of associated funds can be determined, e.g., by identifying this verification information in the verification index, querying a public data source, or the like. Authenticator 202 compares the determined level of funds for the blockchain address to the threshold level of funds and determines whether it meets the level of funds provided by the threshold. An indication of whether the entity meets the threshold level funds associated with the blockchain address is provided back as a verification response. In some cases, to provide additional security and anonymity, the blockchain address may not be provided in the verification response. In an aspect, the amount of funds is not provided in the verification response. Instead, the indication may include a binary indication that indicates whether the funds for the entity meet the threshold level. In some aspects, the verification response comprises verification information without including the blockchain address or the total amount of funds, or both.

Having described an overview of some embodiments of the present technology, an example computing environment in which embodiments of the present technology may be implemented is described below in order to provide a general context for various aspects of the present technology. Referring now to FIG. 9 in particular, an example operating environment for implementing embodiments of the present technology is shown and designated generally as computing device 900. Computing device 900 is but one example of a suitable computing environment and is not intended to suggest any limitation as to the scope of use or functionality of the technology. Neither should computing device 900 be interpreted as having any dependency or requirement relating to any one or combination of components illustrated.

The technology may be described in the general context of computer code or machine-useable instructions, including computer-executable instructions, such as program modules, being executed by a computer or other machine, such as a cellular telephone, personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 9, computing device 900 includes bus 910 that directly or indirectly couples the following devices: memory 912; one or more processors 914; one or more presentation components 916; input/output (I/O) ports 918; input/output components 920; and illustrative power supply 922. Bus 910 represents what may be one or more busses (such as an address bus, data bus, or combination thereof). Although the various blocks of FIG. 9 are shown with lines for the sake of clarity, in reality, delineating various components is not so clear and, metaphorically, the lines would more accurately be grey and fuzzy. For example, one may consider a presentation component, such as a display device, to be an I/O component. Also, processors have memory. The inventors recognize that such is the nature of the art, and reiterate that the diagram of FIG. 9 is merely illustrative of an example computing device that can be used in connection with one or more embodiments of the present technology. Distinction is not made between such categories as "workstation," "server," "laptop," "hand-held device," etc., as all are contemplated within the scope of FIG. 9 and with reference to "computing device."

Computing device 900 typically includes a variety of computer-readable media. Computer-readable media can be any available media that can be accessed by computing device 900 and includes both volatile and nonvolatile media, and removable and non-removable media. By way of example, and not limitation, computer-readable media may comprise computer storage media and communication media. Computer storage media, also referred to as a communication component, includes both volatile and nonvolatile, removable and non-removable media implemented in any method or technology for storage of information, such as computer-readable instructions, data structures, program modules, or other data. Computer storage media includes, but is not limited to, RAM; ROM; EEPROM; flash memory or other memory technology; CD-ROM; digital versatile disks (DVD) or other optical disk storage; magnetic cassettes; magnetic tape; magnetic disk storage or other magnetic storage devices; or any other medium which can be used to store the desired information and which can be accessed by computing device 900. Computer storage media does not comprise signals per se.

Communication media typically embodies computer-readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 912 includes computer-storage media in the form of volatile or nonvolatile memory. The memory may be removable, non-removable, or a combination thereof. Example hardware devices include solid-state memory, hard drives, optical-disc drives, etc. Memory 912 can store an operating system, and one or more executable programs, such as programs for implementing the blockchain authorization functions or storing blockchain records.

Computing device 900 includes one or more processors that read data from various entities, such as memory 912 or I/O components 920. Presentation component(s) 916 present data indications to a user or other device. Example presentation components include a display device, speaker, printing component, vibrating component, etc.

I/O ports 918 allow computing device 900 to be logically coupled to other devices, including I/O components 920, some of which may be built in. Illustrative components include a microphone, joystick, game pad, satellite dish, scanner, printer, wireless device, etc. The I/O components 920 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition both on screen and adjacent to the screen, air gestures, head and eye tracking, and touch recognition (as described in more detail below) associated with a display of computing device 900. Computing device 900 may be equipped with depth cameras, such as stereoscopic camera systems, infrared camera systems, RGB camera systems, touchscreen technology, and combinations of these, for gesture detection and recognition. Additionally, the computing device 900 may be equipped with accelerometers or gyroscopes that enable detection of motion. The output of the accelerometers or gyroscopes may be provided to the display of computing device 900 to render immersive augmented reality or virtual reality.

At a low level, hardware processors execute instructions selected from a machine language (also referred to as machine code or native) instruction set for a given processor. The processor recognizes the native instructions and performs corresponding low-level functions relating, for example, to logic, control, and memory operations. Low-level software written in machine code can provide more complex functionality to higher levels of software. As used herein, computer-executable instructions includes any software, including low level software written in machine code; higher level software, such as application software; and any combination thereof. In this regard, components for blockchain address authentication can manage resources and provide the described functionality. Any other variations and combinations thereof are contemplated with embodiments of the present technology.

Referring to the drawings and description in general, having identified various components in the present disclosure, it should be understood that any number of components and arrangements might be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, or software. For instance, various functions may be carried out by a processor executing instructions stored in memory. As such, other arrangements and elements (e.g., machines, interfaces, functions, orders, and groupings of functions, etc.) can be used in addition to or instead of those shown.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including," "having," and other like words and their derivatives have the same broad meaning as the word "comprising," and the word "accessing" comprises "receiving," "referencing," or "retrieving" and derivatives thereof. Further, the word "communicating" has the same broad meaning as the word "receiving," or "transmitting" facilitated by software or hardware-based buses, receivers, or transmitters" using communication media described herein.

In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or b thus includes either *a* or *b,* as well as *a* and *b*).

As used throughout, an "entity" is intended to be someone or something that can be defined and have ownership of or control of something else, such as a person, business, website, IP address, social media handle, and so forth. The "identity" is an indication of who or what the entity is. For instance, for a person, it may be their name. For a business, it could be the legal or business name of the entity. In other cases, the entity and its identity may be the same, such as a social media handle. Thus, it is intended that the terms be synonymous, and for the most part, they may be used interchangeably.

For purposes of a detailed discussion above, embodiments of the present technology are described with reference to a distributed computing environment; however the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the schematics described herein, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated in the accompanying drawings is to be interpreted as illustrative and not in a limiting sense.

## Claims

1. A method performed by one or more processors, the method comprising:
receiving (602), at an authentication server (102, 200), an authentication request to authenticate an identity of an entity with a blockchain address (130, 302);
based on an encrypted message (220) encrypted by a private key (216) associated with the identity, determining (604), by the authentication server (102, 200), that the entity controls transactions for the blockchain address (130, 302);
mapping (606), by the authentication server (102, 200), the identity of the entity to the blockchain address (130, 302) in a verification index (212) maintained by the authentication server (102, 200) based on determining that the entity controls transactions for the blockchain address (130, 302);
receiving (700), by the authentication server (102, 200), a verification request from a client device, the verification request comprising the blockchain address (130, 302) and a request to identify the identity of an owner associated with the blockchain address (130, 302); and
providing (608, 706, 808), by the authentication server (102, 200), a verification response indicating an authenticity between the identity of the owner and the blockchain address (130, 302) by querying (704) the verification index (212) and identifying the mapping (704).

2. The method of claim 1, further comprising:
communicating a message in response to receiving the authentication request, wherein the message is encrypted with the private key (216) to generate the encrypted message, the encrypted message being received from an entity to authenticate the identity with the blockchain address (130, 302);
identifying a public key (214) corresponding to the private key (216); and
decrypting the encrypted message with the public key (214);
optionally, wherein determining the identity controls transactions for the blockchain address (130, 302) is based on whether the encrypted message, having been decrypted with the public key (214), matches the message communicated in response to the authentication request.

3. The method of claim 1 or 2, further comprising querying a publicly available data source to identify an amount of funds associated with the blockchain address (130, 302), wherein the verification response comprises the identity of an owner of the blockchain address (130, 302) and the amount of funds associated with the blockchain address (130, 302).

4. The method of any one of claims 1 to 3, further comprising querying the verification index (212) with the blockchain address (130, 302) to identify the mapping between the blockchain address (130, 302) and the identity; and/or
wherein the verification request comprises the blockchain address (130, 302) and the method further comprises using the identity, determined using the blockchain address (130, 302), to determine additional blockchain address (130, 302) associated with the identity by querying the verification index (212), and wherein the verification response further comprises the additional blockchain addresses (130, 302).

5. One or more computer storage media storing computer readable instructions thereon that, when executed by a processor, cause the processor to perform a method comprising:
receiving (802), at an authentication server (102, 200), an encrypted message encrypted by a private key (216) associated with an identity of an entity with a blockchain address (130, 302);
determining (604), by the authentication server (102, 200) and using the encrypted message, that the identity associated with the private key (216) controls transactions for the blockchain address (130, 302);
mapping (606), by the authentication server (102, 200), the identity of the entity to the blockchain address (130, 302) in a verification index (212) maintained by the authentication server (102, 200) based on determining that the entity controls transactions for the blockchain address (130, 302);
receiving (700), by the authentication server (102, 200), a verification request from a client device, the verification request comprising the blockchain address (130, 302) and a request to identify the identity of an owner associated with the blockchain address (130, 302); and
querying (704) the verification index (212) and based on the mapping of the verification index (212), providing (608, 706, 808), by the authentication server (102, 200),a verification response indicating an authenticity between the identity of the owner and the blockchain address (130, 302) and whether the identity of the owner meets a threshold level of funds associated with the blockchain address (130, 302).

6. The one or more computer storage media of claim 5, further comprising:
receiving (602) an authentication request to authenticate the identity with the blockchain address; and
in response to the authentication request, providing a message to a computing device from which the authentication request was received, wherein the computing device encrypts the message with the private key (216) to generate the encrypted message; and/or
further comprising:
accessing a public key (214) corresponding to the private key (216); and
decrypting the encrypted message using the public key (214), wherein determining the identity controls transactions for the blockchain address (130, 302) is based on whether the encrypted message, having been decrypted with the public key (214), matches the message communicated in response to the authentication request.

7. The one or more computer storage media of claim 5 or 6, wherein the verification request comprises the identity and the threshold level of funds, wherein the verification response is provided in response to receiving the verification request; and/or
wherein the verification response is a binary response indicating whether the identity meets the threshold level of funds.

8. The method of any one of claims 5 to 7, further comprising identifying, by querying the verification index (212), additional blockchain addresses (130, 302) associated with the identity, and wherein the indication whether the identity meets the threshold level of funds is based on a total of funds for the blockchain address (130, 302) and funds for the additional blockchain addresses (130, 302).

9. The one or more computer storage media of any one of claims 5 to 8, wherein the verification response does not include the blockchain address (130, 302).

10. The one or more computer storage media of any one of claims 5 to 9, wherein the verification response does not include an amount of funds associated with the blockchain address (130, 302).

11. A system comprising:
at least one processor; and
one or more computer storage media storing computer readable instructions thereon that when executed by the at least one processor cause the at least one processor to perform operations comprising:
receiving (602), at an authentication server (102, 200), an authentication request to authenticate an identity of an entity with a blockchain address (130, 302);
based on an encrypted message (220) encrypted by a private key (216) associated with the identity, determining (604), by the authentication server (102, 200), that the entity controls transactions for the blockchain address (130, 302);
mapping (606), by the authentication server (102, 200), the identity of the entity to the blockchain address (130, 302) in a verification index (212) maintained by the authentication server (102, 200) based on determining that the entity controls transactions for the blockchain address (130, 302);
receiving (602), at the authentication server (102, 200), a verification request to verify an authenticity between an identity of an owner associated with a blockchain address (130, 302);
querying (704) a verification index (212) maintained by the authentication server (102, 200) to identify a mapping between the identity and the blockchain address (130, 302), the mapping based on determining the identity controls transactions for the blockchain address (130, 302) using an encrypted message encrypted by a private key (216) associated with the identity; and
providing (608, 706, 808), by the authentication server (102, 200), a verification response identifying the authenticity between the identity of the owner and the blockchain address (130, 302) by querying the verification index (212) and in response to identifying the mapping.

12. The system of claim 11, further comprising:
communicating, by the server (102, 200), a message in response to receiving the authentication request, wherein the message is encrypted with the private key (216) to generate the encrypted message, the encrypted message being received from the entity to authenticate the identity of the entity with the blockchain address (130, 302);
identifying a public key (214) corresponding to the private key (216); and
decrypting the encrypted message with the public key (214), wherein determining the entity controls transactions for the blockchain address (130, 302) is based on whether the encrypted message, having been decrypted with the public key (214), matches the message communicated in response to the authentication request.

13. The system of any one of claims 11 or 12, wherein the verification request comprises both the identity and the blockchain address (130, 302), and requests the authenticity between the identity and the blockchain address (130, 302); and/or
further comprising identifying, by querying the verification index (212), additional blockchain addresses (130, 302) associated with the identity, and wherein the verification response comprises the additional blockchain addresses (130, 302).

## Patentansprüche

1. Verfahren, das durch einen oder mehrere Prozessoren durchgeführt wird, das Verfahren umfassend:
Empfangen (602), auf einem Authentifizierungsserver (102, 200), einer Authentifizierungsanforderung, um eine Identität einer Entität mit einer Blockchain-Adresse (130, 302) zu authentifizieren;
basierend auf einer verschlüsselten Nachricht (220), die durch einen privaten Schlüssel (216) verschlüsselt ist, der mit der Identität verknüpft ist, Bestimmen (604), durch den Authentifizierungsserver (102, 200), dass die Entität Transaktionen für die Blockchain-Adresse (130, 302) kontrolliert;
Zuordnen (606), durch den Authentifizierungsserver (102, 200), der Identität der Entität zu der Blockchain-Adresse (130, 302) in einem Verifizierungsindex (212), der durch den Authentifizierungsserver (102, 200) verwaltet wird, basierend auf dem Bestimmen, dass die Entität Transaktionen für die Blockchain-Adresse (130, 302) kontrolliert;
Empfangen (700), durch den Authentifizierungsserver (102, 200), einer Verifizierungsanforderung von einer Client-Vorrichtung, die Verifizierungsanforderung umfassend die Blockchain-Adresse (130, 302) und eine Anforderung, die Identität eines Eigentümers zu identifizieren, der mit der Blockchain-Adresse (130, 302) verknüpft ist; und
Bereitstellen (608, 706, 808), durch den Authentifizierungsserver (102, 200), einer Verifizierungsantwort, die eine Authentizität zwischen der Identität des Eigentümers und der Blockchain-Adresse (130, 302) durch Abfragen (704) des Verifizierungsindexes (212) und Identifizieren des Zuordnens (704) angibt.

2. Verfahren nach Anspruch 1, ferner umfassend:
Kommunizieren einer Nachricht als Reaktion auf das Empfangen der Authentifizierungsanforderung, wobei die Nachricht mit dem privaten Schlüssel (216) verschlüsselt wird, um die verschlüsselte Nachricht zu erzeugen, wobei die verschlüsselte Nachricht von einer Entität empfangen wird, um die Identität mit der Blockchain-Adresse (130, 302) zu authentifizieren;
Identifizieren eines öffentlichen Schlüssels (214), der dem privaten Schlüssel (216) entspricht; und
Entschlüsseln der verschlüsselten Nachricht mit dem öffentlichen Schlüssel (214);
optional wobei das Bestimmen der Identitätskontrolltransaktionen für die Blockchain-Adresse (130, 302) darauf basiert, ob die verschlüsselte Nachricht, die mit dem öffentlichen Schlüssel (214) entschlüsselt wurde, mit der Nachricht übereinstimmt, die als Reaktion auf die Authentifizierungsanforderung kommuniziert wird.

3. Verfahren nach Anspruch 1 oder 2, ferner umfassend das Abfragen einer öffentlich verfügbaren Datenquelle, um einen Betrag an Geldmitteln zu identifizieren, der mit der Blockchain-Adresse (130, 302) verknüpft ist, wobei die Verifizierungsantwort die Identität eines Eigentümers der Blockchain-Adresse (130, 302) und den Betrag an Geldmitteln umfasst, der mit der Blockchain-Adresse (130, 302) verknüpft ist.

4. Verfahren nach einem der Ansprüche 1 bis 3, ferner umfassend das Abfragen des Verifizierungsindexes (212) mit der Blockchain-Adresse (130, 302), um das Zuordnen zwischen der Blockchain-Adresse (130, 302) und der Identität zu identifizieren; und/oder
wobei die Verifizierungsanforderung die Blockchain-Adresse (130, 302) umfasst und das Verfahren ferner die ein Verwenden der Identität umfasst, die unter Verwendung der Blockchain-Adresse (130, 302) bestimmt wird, um durch Abfragen des Verifizierungsindexes (212) zusätzliche Blockchain-Adressen (130, 302) zu bestimmen, die mit der Identität verknüpft sind, und wobei die Verifizierungsantwort ferner die zusätzlichen Blockchain-Adressen (130, 302) umfasst.

5. Ein oder mehrere Computerspeichermedien, die computerlesbare Anweisungen darauf speichern, die, wenn sie durch einen Prozessor ausgeführt werden, den Prozessor veranlassen, ein Verfahren durchzuführen, umfassend:
Empfangen (802), auf einem Authentifizierungsserver (102, 200), einer verschlüsselten Nachricht, die durch einen privaten Schlüssel (216) verschlüsselt ist, der mit einer Identität einer Entität mit einer Blockchain-Adresse (130, 302) verknüpft ist;
Bestimmen (604), durch den Authentifizierungsserver (102, 200), und unter Verwendung der verschlüsselten Nachricht, dass die Identität, die mit dem privaten Schlüssel (216) verknüpft ist, Transaktionen für die Blockchain-Adresse (130, 302) steuert;
Zuordnen (606), durch den Authentifizierungsserver (102, 200), der Identität der Entität zu der Blockchain-Adresse (130, 302) in einem Verifizierungsindex (212), der durch den Authentifizierungsserver (102, 200) verwaltet wird, basierend auf dem Bestimmen, dass die Entität Transaktionen für die Blockchain-Adresse (130, 302) kontrolliert;
Empfangen (700), durch den Authentifizierungsserver (102, 200), einer Verifizierungsanforderung von einer Client-Vorrichtung, die Verifizierungsanforderung umfassend die Blockchain-Adresse (130, 302) und eine Anforderung, die Identität eines Eigentümers zu identifizieren, der mit der Blockchain-Adresse (130, 302) verknüpft ist; und
Abfragen (704) des Verifizierungsindexes (212) und basierend auf dem Zuordnen des Verifizierungsindexes (212), Bereitstellen (608, 706, 808), durch den Authentifizierungsserver (102, 200), einer Verifizierungsantwort, die eine Authentizität zwischen der Identität des Eigentümers und der Blockchain-Adresse (130, 302) angibt und ob die Identität des Eigentümers einen Schwellenwert der Geldmittel erreicht, die mit der Blockchain-Adresse (130, 302) verknüpft sind.

6. Ein oder mehrere Computerspeichermedien nach Anspruch 5, ferner umfassend:
Empfangen (602) einer Authentifizierungsanforderung, um die Identität mit der Blockchain-Adresse zu authentifizieren; und
als Reaktion auf die Authentifizierungsanforderung, Bereitstellen einer Nachricht an eine Rechenvorrichtung, von der die Authentifizierungsanforderung empfangen wurde, wobei die Rechenvorrichtung die Nachricht mit dem privaten Schlüssel (216) verschlüsselt, um die verschlüsselte Nachricht zu erzeugen; und/oder
ferner umfassend:
Zugreifen auf einen öffentlichen Schlüssel (214), der dem privaten Schlüssel (216) entspricht; und
Entschlüsseln der verschlüsselten Nachricht unter Verwendung des öffentlichen Schlüssels (214), wobei das Bestimmen der Identitätskontrolltransaktionen für die Blockchain-Adresse (130, 302) darauf basiert, ob die verschlüsselte Nachricht, die mit dem öffentlichen Schlüssel (214) entschlüsselt wurde, mit der Nachricht übereinstimmt, die als Reaktion auf die Authentifizierungsanforderung kommuniziert wird.

7. Ein oder mehrere Computerspeichermedien nach Anspruch 5 oder 6, wobei die Verifizierungsanforderung die Identität und den Schwellenwert der Geldmittel umfasst, wobei die Verifizierungsantwort als Reaktion auf das Empfangen der Verifizierungsanforderung bereitgestellt wird; und/oder
wobei die Verifizierungsantwort eine binäre Antwort ist, die angibt, ob die Identität den Schwellenwert der Geldmittel erreicht.

8. Verfahren nach einem der Ansprüche 5 bis 7, ferner umfassend das Identifizieren, durch Abfragen des Verifizierungsindexes (212), zusätzlicher Blockchain-Adressen (130, 302), die mit der Identität verknüpft sind, und wobei die Angabe, ob die Identität den Schwellenwert an Geldmitteln erreicht, auf einer Summe der Geldmittel für die Blockchain-Adresse (130, 302) und der Geldmittel für die zusätzlichen Blockchain-Adressen (130, 302) basiert.

9. Ein oder mehrere Computerspeichermedien nach einem der Ansprüche 5 bis 8, wobei die Verifizierungsantwort nicht die Blockchain-Adresse (130, 302) einschließt.

10. Ein oder mehrere Computerspeichermedien nach einem der Ansprüche 5 bis 9, wobei die Verifizierungsantwort keinen Betrag an Geldmitteln einschließt, der mit der Blockchain-Adresse (130, 302) verknüpft ist.

11. System, umfassend:
mindestens einen Prozessor; und
ein oder mehrere Computerspeichermedien, die computerlesbare Anweisungen darauf speichern, die, wenn sie durch den mindestens einen Prozessor ausgeführt werden, den mindestens einen Prozessor veranlassen, Vorgänge durchzuführen, umfassend:
Empfangen (602), auf einem Authentifizierungsserver (102, 200), einer Authentifizierungsanforderung, um eine Identität einer Entität mit einer Blockchain-Adresse (130, 302) zu authentifizieren;
basierend auf einer verschlüsselten Nachricht (220), die durch einen privaten Schlüssel (216) verschlüsselt ist, der mit der Identität verknüpft ist, Bestimmen (604), durch den Authentifizierungsserver (102, 200), dass die Entität Transaktionen für die Blockchain-Adresse (130, 302) kontrolliert;
Zuordnen (606), durch den Authentifizierungsserver (102, 200), der Identität der Entität zu der Blockchain-Adresse (130, 302) in einem Verifizierungsindex (212), der durch den Authentifizierungsserver (102, 200) verwaltet wird, basierend auf dem Bestimmen, dass die Entität Transaktionen für die Blockchain-Adresse (130, 302) kontrolliert;
Empfangen (602), auf dem Authentifizierungsserver (102, 200), einer Verifizierungsanforderung, um eine Authentizität zwischen einer Identität eines Eigentümers anzufordern, der mit einer Blockchain-Adresse (130, 302) verknüpft ist;
Abfragen (704) eines Verifizierungsindexes (212), der durch den Authentifizierungsserver (102, 200) verwaltet wird, um ein Zuordnen zwischen der Identität und der Blockchain-Adresse (130, 302) zu identifizieren, wobei das Zuordnen, basierend auf dem Bestimmen der Identität, die Transaktionen für die Blockchain-Adresse (130, 302) unter Verwendung einer verschlüsselten Nachricht steuert, die durch einen privaten Schlüssel (216) verschlüsselt ist, der mit der Identität verknüpft ist; und
Bereitstellen (608, 706, 808), durch den Authentifizierungsserver (102, 200), einer Verifizierungsantwort, die die Authentizität zwischen der Identität des Eigentümers und der Blockchain-Adresse (130, 302) durch Abfragen des Verifizierungsindexes (212) und als Reaktion auf das Identifizieren des Zuordnens identifiziert.

12. System nach Anspruch 11, ferner umfassend:
Kommunizieren, durch den Server (102, 200), einer Nachricht als Reaktion auf das Empfangen der Authentifizierungsanforderung, wobei die Nachricht mit dem privaten Schlüssel (216) verschlüsselt wird, um die verschlüsselte Nachricht zu erzeugen, wobei die verschlüsselte Nachricht von der Entität empfangen wird, um die Identität der Entität mit der Blockchain-Adresse (130, 302) zu authentifizieren;
Identifizieren eines öffentlichen Schlüssels (214), der dem privaten Schlüssel (216) entspricht; und
Entschlüsseln der verschlüsselten Nachricht mit dem öffentlichen Schlüssel (214), wobei das Bestimmen, dass die Entität die Transaktionen für die Blockchain-Adresse (130, 302) steuert, darauf basiert, ob die verschlüsselte Nachricht, die mit dem öffentlichen Schlüssel (214) entschlüsselt wurde, mit der Nachricht übereinstimmt, die als Reaktion auf die Authentifizierungsanforderung kommuniziert wird.

13. System nach einem der Ansprüche 11 oder 12, wobei die Verifizierungsanforderung sowohl die Identität als auch die Blockchain-Adresse (130, 302) umfasst und die Authentizität zwischen der Identität und der Blockchain-Adresse (130, 302) anfordert; und/oder
ferner umfassend Identifizieren, durch Abfragen des Verifizierungsindexes (212), zusätzlicher Blockchain-Adressen (130, 302), die mit der Identität verknüpft sind, und wobei die Verifizierungsantwort die zusätzlichen Blockchain-Adressen (130, 302) umfasst.

## Revendications

1. Procédé réalisé par un ou plusieurs processeurs, le procédé comprenant :
la réception (602), au niveau d'un serveur d'authentification (102, 200), d'une demande d'authentification pour authentifier une identité d'une entité avec une adresse de chaîne de blocs (130, 302) ;
sur la base d'un message chiffré (220) chiffré par une clé privée (216) associée à l'identité, le fait de déterminer (604), par le serveur d'authentification (102, 200), que l'entité commande les transactions pour l'adresse de chaîne de blocs (130, 302) ;
le mappage (606), par le serveur d'authentification (102, 200), de l'identité de l'entité à l'adresse de chaîne de blocs (130, 302) dans un indice de vérification (212) maintenu par le serveur d'authentification (102, 200) sur la base du fait de déterminer que l'entité commande les transactions pour l'adresse de chaîne de blocs (130, 302) ;
la réception (700), par le serveur d'authentification (102, 200), d'une demande de vérification provenant d'un dispositif client, la demande de vérification comprenant l'adresse de chaîne de blocs (130, 302) et une demande d'identification de l'identité d'un propriétaire associé à l'adresse de chaîne de blocs (130, 302) ; et
la fourniture (608, 706, 808), par le serveur d'authentification (102, 200), d'une réponse de vérification indiquant une authenticité entre l'identité du propriétaire et l'adresse de chaîne de blocs (130, 302) en interrogeant (704) l'indice de vérification (212) et en identifiant le mappage (704).

2. Procédé selon la revendication 1, comprenant en outre :
la communication d'un message en réponse à la réception de la demande d'authentification, dans lequel le message est chiffré avec la clé privée (216) pour générer le message chiffré, le message chiffré étant reçu d'une entité pour authentifier l'identité avec l'adresse de chaîne de blocs (130, 302) ;
l'identification d'une clé publique (214) correspondant à la clé privée (216) ; et
le déchiffrement du message chiffré à l'aide de la clé publique (214) ;
éventuellement, dans lequel la détermination de l'identité commande des transactions pour l'adresse de chaîne de blocs (130, 302) sur la base du fait que le message chiffré, ayant été déchiffré avec la clé publique (214), correspond au message communiqué en réponse à la demande d'authentification.

3. Procédé selon la revendication 1 ou 2, comprenant en outre l'interrogation d'une source de données publiquement disponible pour identifier un montant de fonds associé à l'adresse de chaîne de blocs (130, 302), dans lequel la réponse de vérification comprend l'identité d'un propriétaire de l'adresse de chaîne de blocs (130, 302) et le montant de fonds associé à l'adresse de chaîne de blocs (130, 302).

4. Procédé selon l'une quelconque des revendications 1 à 3, comprenant en outre l'interrogation de l'indice de vérification (212) avec l'adresse de chaîne de blocs (130, 302) pour identifier le mappage entre l'adresse de chaîne de blocs (130, 302) et l'identité ; et/ou
dans lequel la demande de vérification comprend l'adresse de chaîne de blocs (130, 302) et le procédé comprend en outre l'utilisation de l'identité, déterminée à l'aide de l'adresse de chaîne de blocs (130, 302), pour déterminer l'adresse de chaîne de blocs supplémentaire (130, 302) associée à l'identité en interrogeant l'indice de vérification (212), et dans lequel la réponse de vérification comprend en outre les adresses de chaîne de blocs supplémentaires (130, 302).

5. Un ou plusieurs supports de stockage informatique stockant des instructions lisibles par ordinateur qui, lorsqu'elles sont exécutées par un processeur, amènent le processeur à réaliser un procédé comprenant :
la réception (802), au niveau d'un serveur d'authentification (102, 200), d'un message chiffré chiffré par une clé privée (216) associée à une identité d'une entité ayant une adresse de chaîne de blocs (130, 302) ;
le fait de déterminer (604), par le serveur d'authentification (102, 200) et à l'aide du message chiffré, que l'identité associée à la clé privée (216) commande des transactions pour l'adresse de chaîne de blocs (130, 302) ;
le mappage (606), par le serveur d'authentification (102, 200), de l'identité de l'entité à l'adresse de chaîne de blocs (130, 302) dans un indice de vérification (212) maintenu par le serveur d'authentification (102, 200) sur la base du fait de déterminer que l'entité commande les transactions pour l'adresse de chaîne de blocs (130, 302) ;
la réception (700), par le serveur d'authentification (102, 200), d'une demande de vérification provenant d'un dispositif client, la demande de vérification comprenant l'adresse de chaîne de blocs (130, 302) et une demande d'identification de l'identité d'un propriétaire associé à l'adresse de chaîne de blocs (130, 302) ; et
l'interrogation (704) de l'indice de vérification (212) et, sur la base du mappage de l'indice de vérification (212), la fourniture (608, 706, 808), par le serveur d'authentification (102, 200), d'une réponse de vérification indiquant une authenticité entre l'identité du propriétaire et l'adresse de chaîne de blocs (130, 302) et si l'identité du propriétaire répond à un niveau seuil de fonds associé à l'adresse de chaîne de blocs (130, 302).

6. Le ou les supports de stockage informatique selon la revendication 5, comprenant en outre :
la réception (602) d'une demande d'authentification pour authentifier l'identité avec l'adresse de chaîne de blocs ; et
en réponse à la demande d'authentification, la fourniture d'un message à un dispositif informatique à partir duquel la demande d'authentification a été reçue, dans lequel le dispositif informatique chiffre le message à l'aide de la clé privée (216) pour générer le message chiffré ; et/ou
comprenant en outre :
l'accès à une clé publique (214) correspondant à la clé privée (216) ; et
le déchiffrement du message chiffré à l'aide de la clé publique (214), dans lequel la détermination de l'identité commande des transactions pour l'adresse de chaîne de blocs (130, 302) sur la base du fait que le message chiffré, ayant été déchiffré à l'aide de la clé publique (214), correspond au message communiqué en réponse à la demande d'authentification.

7. Le ou les supports de stockage informatique selon la revendication 5 ou 6, dans lesquels la demande de vérification comprend l'identité et le niveau seuil de fonds, dans lesquels la réponse de vérification est fournie en réponse à la réception de la demande de vérification ; et/ou
dans lesquels la réponse de vérification est une réponse binaire indiquant si l'identité correspond au niveau seuil de fonds.

8. Procédé selon l'une quelconque des revendications 5 à 7, comprenant en outre l'identification, par interrogation de l'indice de vérification (212), d'adresses chaîne de blocs supplémentaires (130, 302) associées à l'identité, et dans lequel l'indication selon laquelle l'identité répond au niveau seuil de fonds est basée sur un total de fonds pour l'adresse de chaîne de blocs (130, 302) et de fonds pour les adresses de chaîne de blocs supplémentaires (130, 302).

9. Le ou les supports de stockage informatique selon l'une quelconque des revendications 5 à 8, dans lesquels la réponse de vérification ne comporte pas l'adresse de chaîne de blocs (130, 302).

10. Le ou les supports de stockage informatique selon l'une quelconque des revendications 5 à 9, dans lesquels la réponse de vérification ne comporte pas un montant de fonds associé à l'adresse de chaîne de blocs (130, 302).

11. Système comprenant :
au moins un processeur ; et
un ou plusieurs supports de stockage informatique y stockant des instructions lisibles par ordinateur qui, lorsqu'elles sont exécutées par l'au moins un processeur, amènent l'au moins un processeur à réaliser les opérations comprenant :
la réception (602), au niveau d'un serveur d'authentification (102, 200), d'une demande d'authentification pour authentifier une identité d'une entité avec une adresse de chaîne de blocs (130, 302) ;
sur la base d'un message chiffré (220) chiffré par une clé privée (216) associée à l'identité, le fait de déterminer (604), par le serveur d'authentification (102, 200), que l'entité commande les transactions pour l'adresse de chaîne de blocs (130, 302) ;
le mappage (606), par le serveur d'authentification (102, 200), de l'identité de l'entité à l'adresse de chaîne de blocs (130, 302) dans un indice de vérification (212) maintenu par le serveur d'authentification (102, 200) sur la base du fait de déterminer que l'entité commande les transactions pour l'adresse de chaîne de blocs (130, 302) ;
la réception (602), au niveau du serveur d'authentification (102, 200), d'une demande de vérification pour vérifier l'authenticité entre une identité d'un propriétaire associé à une adresse de chaîne de blocs (130, 302) ;
l'interrogation (704) d'un indice de vérification (212) maintenu par le serveur d'authentification (102, 200) pour identifier un mappage entre l'identité et l'adresse de chaîne de blocs (130, 302), le mappage étant basé sur le fait de déterminer que l'identité commande des transactions pour l'adresse de chaîne de blocs (130, 302) à l'aide d'un message chiffré chiffré par une clé privée (216) associée à l'identité ; et
la fourniture (608, 706, 808), par le serveur d'authentification (102, 200), d'une réponse de vérification identifiant l'authenticité entre l'identité du propriétaire et l'adresse de chaîne de blocs (130, 302) en interrogeant l'indice de vérification (212) et en réponse à l'identification du mappage.

12. Système selon la revendication 11, comprenant en outre :
la communication, par le serveur (102, 200), d'un message en réponse à la réception de la demande d'authentification, dans lequel le message est chiffré à l'aide de la clé privée (216) pour générer le message chiffré, le message chiffré étant reçu de l'entité pour authentifier l'identité de l'entité avec l'adresse de chaîne de blocs (130, 302) ;
l'identification d'une clé publique (214) correspondant à la clé privée (216) ; et
le déchiffrement du message chiffré à l'aide de la clé publique (214), dans lequel la détermination de l'entité commande des transactions pour l'adresse de chaîne de blocs (130, 302) sur la base du fait que le message chiffré, ayant été déchiffré à l'aide de la clé publique (214), correspond au message communiqué en réponse à la demande d'authentification.

13. Système selon l'une quelconque des revendications 11 ou 12, dans lequel la demande de vérification comprend à la fois l'identité et l'adresse de chaîne de blocs (130, 302), et demande l'authenticité entre l'identité et l'adresse de chaîne de blocs (130, 302) ; et/ou
comprenant en outre l'identification, en interrogeant l'indice de vérification (212), d'adresses de chaîne de blocs supplémentaires (130, 302) associées à l'identité, et dans lequel la réponse de vérification comprend les adresses de chaîne de blocs supplémentaires (130, 302).
